# EUROPÄISCHE PATENTSCHRIFT

(11) **EP 0 510 359 B1**
(45) Veröffentlichungstag und Bekanntmachung des Hinweises auf die Patenterteilung: **14.09.1994**
(21) Anmeldenummer: 92104748.6
(22) Anmeldetag: 19.03.1992
(51) Int. Cl.: F16F 9/04, B60G 11/27, B60G 11/28

(54) **Luftfeder zwischen Rahmen und Achse von Nutzfahrzeugen**
Air spring between frame and axle of commercial vehicles
Ressort d'air entre le chassis et l'axe de véhicules utilitaires

(30) Priorität: 23.04.1991 DE 4113164
(43) Veröffentlichungstag der Anmeldung: 28.10.1992
(73) Patentinhaber: MAN Nutzfahrzeuge Aktiengesellschaft, 80976 München (DE)
(72) Erfinder: Ladig, Bruno, Dipl.-Ing. (FH), W-8000 München 50 (DE)

(56) Entgegenhaltungen:
- EP-A- 0 296 445
- DE-A- 3 345 536
- DE-A- 3 934 821
- US-A- 5 005 808

## Beschreibung

Die Erfindung bezieht sich auf eine Luftfeder mit Rollbalg, Abrollkolben, Anschlagpuffer und Befestigungsplatte mit Anschlag, angeordnet zwischen Rahmen und Achse von Nutzfahrzeugen.

Bekannt sind derartige Luftfedern mit oberhalb des Abrollkolbens angeordneten Anschlagpuffern. Bei dieser Ausführung geht Bauhöhe verloren.

Der Erfindung liegt die Aufgabe zugrunde, Luftfedern mit reduzierter Bauhöhe zu schaffen.

Dies wird erfindungsgemäß dadurch erreicht, daß der Abrollkolben auf seiner Kopfseite eine Ausnehmung aufweist, an deren Innenrand eine erste Nut zum Einklipsen des am unteren Rollbalgendes angeordneten Wulstes und in deren Boden eine zweite Nut zum Einpressen des Anschlagpuffers vorgesehen sind. Dabei bildet die Anschlagfläche des Anschlagpuffers mit der oberen Begrenzung des Abrollkolbens eine Ebene. Solcherart kann gegenüber der bisherigen Lösung ca. 30 bis 40 cm an Bauhöhe eingespart werden. Dies ist heutzutage besonders wichtig, da der allgemeine Trend zu niedriger Bauweise bei Nutzfahrzeugen geht, dies gilt insbesondere für die zur Zeit stark in Mode kommenden Niederflurbusse. Die gewonnene Bauhöhe kann auch als Überweg zum Liften von Vor- und Nachlaufachsen genutzt werden.

In vorteilhafter Ausbildung der Erfindung weist der Anschlagpuffer auf seiner Anschlagfläche eine oder mehrere sich über den Durchmesser erstreckende Rillen auf. Solcherart wird beim Kontakt des Anschlages der Befestigungsplatte mit dem Anschlagpuffer ein Ansaugen der in Kontakt kommenden Flächen vermieden.

Der Anschlag der Befestigungsplatte am Rahmen wird im Durchmesser so bemessen, daß beim Absenken diese an den Anschlagpuffer zur Auflage kommt und die untere Rollbalgseite noch Freiraum hat.

Die Erfindung ist in einem Ausführungsbeispiel dargestellt.

Es zeigen
- Fig. 1: eine Luftfeder im Teilschnitt in konventioneller Ausführung,
- Fig. 2: eine Luftfeder im Teilschnitt gemäß der erfinderischen Ausführung.

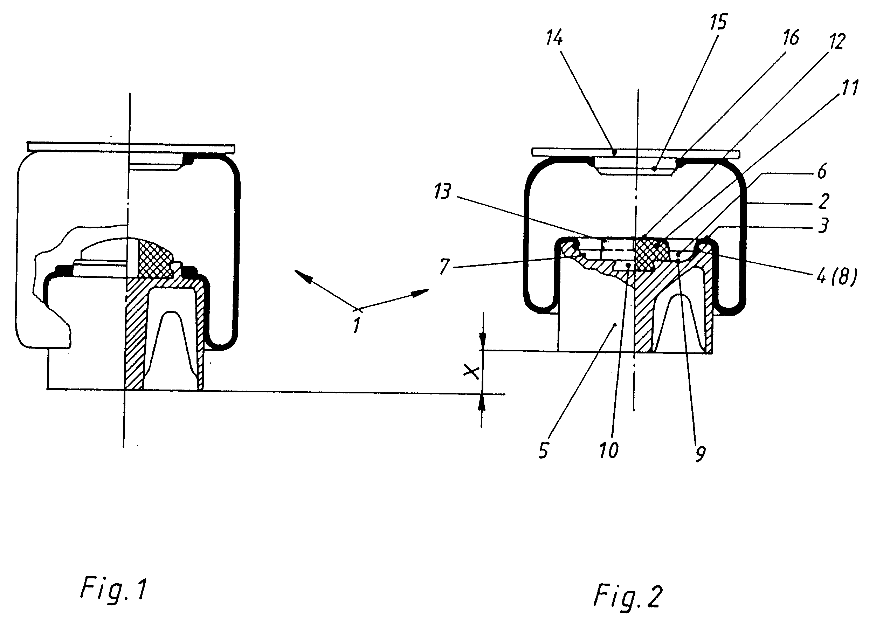

Gemäß Fig 2 ist am Rahmen eines Nutzfahrzeuges eine Befestigungsplatte 14 mit Anschlag 15 vorgesehen. Der Anschlag 15 hat einen seitlichen Dichtsitz 16 und zentriert einen Rollbalg 2, der mit seinem oberen Ende an der Befestigungsplatte 14 anliegt. Anderenendes ist der Rollbalg mit seinem unteren Rollbalgende 3, das eine Wulst 4 aufweist, in einer ersten Nut 8 dichtend gehalten, die sich am Innenrand 7 einer von Abrollkolben 5 augebildeten Ausnehmung 6 befindet. Im Boden 9 der Ausnehmung 6 ist eine zweite Nut 10 angebracht, in die der Anschlagpuffer 11 eingepreßt wird, wobei die Anschlagfläche 12 des Anschlagpuffers bündig mit der oberen Begrenzungsfläche des Rollkolbens 5 angeordnet sein soll. Die Anschlagfläche 12 des Anschlagpuffers 11 weist eine oder mehrere Rillen 13 auf, die sich über den ganzen Durchmesser erstrecken. Sie sollen, wenn Anschlagfläche 12 und Anschlag 15 in Berührung kommen ein Ansaugen der Flächen verhindern. Die Fig. 1 zeigt eine Luftfeder in der bisher üblichen Ausführung. Aus dem Bauhöhenunterschied X ist sehr deutlich die bauraumverkleinernde Verbesserung der erfinderischen Ausführung zu erkennen.

## Patentansprüche

1. Luftfeder mit Rollbalg, Abrollkolben, Anschlagpuffer und Befestigungsplatte mit Anschlag, angeordnet zwischen Rahmen und Achse von Nutzfahrzeugen, dadurch gekennzeichnet, daß der Abrollkolben (5) auf seiner Kopfseite eine Ausnehmung (6) aufweist, an deren Innenrand (7) eine erste Nut (8) zum Einklipsen des am unteren Rollbalgende (3) angeordneten Wulstes (4) und in deren Boden (9) eine zweite Nut (10) zum Einpressen des Anschlagpuffers (11) vorgesehen sind.

2. Luftfeder nach Anspruch 1, dadurch gekennzeichnet, daß die Anschlagfläche (12) des Anschlagpuffers (11) mit der oberen Begrenzung des Abrollkolbens (5) eine Ebene bildet.

3. Luftfeder nach Anspruch 1 oder 2, dadurch gekennzeichnet, daß der Anschlagpuffer (11) aus Kunststoff oder Gummi gebildet ist.

4. Luftfeder nach den Ansprüchen 1 bis 3, dadurch gekennzeichnet, daß der Anschlagpuffer (11) auf seiner Anschlagfläche (12) eine oder mehrere sich über den Durchmesser erstreckende Rillen (13) aufweist.

5. Luftfeder nach einem oder mehreren der Ansprüche 1 bis 4, dadurch gekennzeichnet, daß der Anschlag (15) an der Befestigungsplatte (14) gleich oder kleiner im Durchmesser als der Anschlagpuffer (11) ausgebildet ist.

## Claims

1. A pneumatic spring having rolling bellows, an unrolling piston, stop buffer and a securing plate with stop, arranged between the chassis frame and the axle of commercial vehicles, characterised in that the head of the unrolling piston (5) has a recess (6), the inner edge (7) of the recess (6) being provided with a first groove (8) in order to clip in the swelling (4) which is arranged at the lower end (3) of the rolling bellows, and the base (9) of the recess (6) being provided with a second groove (10) in order to press in the stop buffer (11).

2. A pneumatic spring in accordance with Claim 1, characterised in that the stop face (12) of the stop buffer (11) forms a plane with the upper boundary of the unrolling piston (5).

3. A pneumatic spring in accordance with Claim 1 or 2, characterised in that the stop buffer (11) is formed from a plastics material or rubber.

4. A pneumatic spring in accordance with Claims 1 to 3, characterised in that the stop buffer (11) has one or a plurality of channels (13) which extend over the diameter of the stop face (12).

5. A pneumatic spring in accordance with one or several of Claims 1 to 4, characterised in that the diameter of the stop (15) on the securing plate (14) is equal to or smaller than the diameter of the stop buffer (11).

## Revendications

1. Ressort à air muni d'un soufflet à déroulement, d'un piston de déroulement, d'un tampon de butée et d'une plaque de fixation avec une butée, ce ressort étant monté entre le châssis et l'essieu d'un véhicule utilitaire, ressort à air caractérisé en ce que le piston à déroulement (5) comporte dans sa tête une cavité (6) dont le bord intérieur (7) est muni d'une première nervure (8) pour encliqueter le bourrelet (4) prévu au bord inférieur (3) du soufflet à déroulement, le fond (9) du piston comportant une seconde rainure (10) dans laquelle est enfoncé le tampon de butée (11).

2. Ressort à air d'un soufflet selon la revendication 1, caractérisé en ce que la surface de butée (12) du tampon de butée (11) fait un plan avec la limite supérieure du piston de déroulement (5).

3. Ressort à air d'un soufflet selon la revendication 1 ou 2, caractérisé en ce que le tampon de butée (11) est en matière plastique ou en caoutchouc.

4. Ressort à air d'un soufflet selon les revendications 1 à 3, caractérisé en ce que le tampon de butée (11) comporte sur sa surface de butée (12) une ou plusieurs rainures (13) s'étendant suivant tout le diamètre.

5. Ressort à air d'un soufflet selon les revendications 1 à 4, caractérisé en ce que la butée (15) sur la plaque de fixation (14) a un diamètre égal ou inférieur à celui du tampon de butée (11).
